# EUROPEAN PATENT APPLICATION

(11) **EP 1 768 354 A1**
(43) Date of publication of application: **28.03.2007**
(21) Application number: 05020599.6
(22) Date of filing: 21.09.2005
(51) Int. Cl.: H04M 1/02, H04M 1/23, H04M 1/725, H04M 1/247

(54) **Portable communication apparatus comprising a double-sided keyboard rotatably and foldably connected to a housing part**

(71) Applicant: Giga-Byte Communications, Inc., Taipei (TW); Giga-Byte Technology Co., Ltd., Taipei (TW)
(72) Inventor: Huang, Cheng-Wen Giga-Byte Communications, Ltd., Hsin-Tien Taipei (TW); Lee, Tsung-Jen Giga-Byte Communications, Ltd., Hsin-Tien Taipei (TW)
(74) Representative: Urner, Peter

(57) **Abstract**

A portable communication apparatus equipped with basic communication functions and game functions include a first body and a second body. The first body has a bi-directional axle, a display screen and a first keyboard area on the top surface. The second body is hinged on the bi-directional axle, and includes a second keyboard area on the top surface thereof and a third keyboard area on the back surface. The second body is turnable around the bi-directional axle relative to the first body to generate movements around two axes, to turn the second keyboard area or the third keyboard area, to face the display screen and to fold over the first body. When the second body is turned relative to the first body, the image displayed on the display screen also is turned to a selected angle.

## Description

### BACKGROUND OF THE INVENTION

### Field of Invention

The present invention relates to a communication electronic product equipped with game functions and particularly to a portable communication apparatus that can play 3D games.

### Related Art

Among various electronic products, the mobile phone has almost become a personal standard accessory. The earlier mobile phone merely provided a communication function. However these days the performance of the mobile phone has made great progress. Besides from a smaller size and improved communication quality, the present mobile phone that can provide other functions has become the mainstream on the market.

In the past, users had to set and edit the ring tone, MP3 music playing, photo taking and personal calendar functions. Now many of the functions that are available on the personal digital assistant (PDA) have been integrated in the mobile phone.

Due to considerations of product appearance and operation mode, many producers have jumped on the bandwagon in developing and introducing flip phones. For instance, Motorola has mobile phone model V600 (referring to www.motorola.com), Nokia has mobile phone model 7270 (referring to www.nokia.com, and SONY has PDA model PEG-UX50 (referring to http://www.clie-online.sony.net). A flip phone or PDA can provide a larger display screen or other operation modes (such as having a keypad for data entry). The flip phone mainly includes a keypad and a display screen on a flip cover. The flip cover is hinged on the top end of the host through a unidirectional axle. The flip cover may be lifted from the host or folded over the host. While a larger display screen may be obtained by adopting the design of the flip cover, the unidirectional axle allows the flip cover to turn around the axle in only one direction. This limits the operation mode.

One of the main trends of the present mobile phone is to equip the lens to take video images and still pictures. In order to provide multiple photo taking functions or other operation modes, a mobile phone, equipped with a bi-directional axle, has been developed and introduced. For instance, LG's models G7070 and G720, and Samsung's SGH-P738 have a specially designed bi-directional strut axle. U.S. patent publication Nos. 20040110529, 20040192422, and 20040198474 also provide related techniques.

The aforesaid mobile phone products and patents all provide mobile phones with a bi-directional axle. The flip cover is hinged on the top end of the host through the bi-directional axle. Hence the flip cover can be lifted or the display screen can be selectively moved to face the host. When the display screen is in an operation mode by turning the backside close to the host, the mobile phone can function as a digital camera to take pictures through the photo-taking lens.

As the electronic products have to meet the increasing demands of consumers, they have to be more versatile, multifunctional and easy to carry. Hence to integrate the functions of the mobile phone and PDA has become the prevailing trend of electronic product development. As a result a PDA phone or smart phone that equips with the functions of a mobile phone and PDA has been developed. Such a smart phone generally adopts the structure of a mobile phone or PDA. In other words, the aforesaid bi-directional axle is being used on the smart phone to provide multi-operation modes for the smart phone. For instance, to use the mobile phone function, the flip cover may be lifted to operate the phone keypad. To use the PDA function, turn the flip cover to have the backside of the flip cover folding over the host, then the display screen can receive touch operation of a stylus. References of the mobile phone or smart phone that adopt the bi-directional axle can be found in U.S. patent publication Nos. 20040203527, 20040203532, 20040203535 and 20040209645.

The operation mode of the smart phone previously discussed uses a few keys and the stylus as the main input tool. In order to provide an improved input mode, some smart phones include a QWERTY keyboard. For instance, U.S. patent publication Nos.20040203513 and 20040204197 provide a second axle or a third axle to hinge a QWERTY keyboard on the host. The QWERTY keyboard may be folded or retracted on the host. In the PDA function mode, the QWERTY keyboard may be lifted or pulled out to do data entry. However such a structure has to include an extra QWERTY keyboard. The structure of the smart phone becomes more complicated and bulky. This is not a desirable design.

U.S. patent publication No. 20040203517 also discloses a smart phone, which includes a host and a display screen. The host has a QWERTY keyboard on two sides of the surface. The display screen has a phone keypad. The display screen is hinged in the center of the host through a unidirectional axle and may be swiveled horizontally. In the mobile phone operation mode, the display screen and the host are positioned in the same direction to cover the QWERTY keyboard on one side. In the PDA operation mode, the display screen may be swiveled horizontally 90 degrees to be normal to the host. And users can operate the QWERTY keyboard on two sides of the host. But in the PDA operation mode, the display screen is parallel with the host. To facilitate data entry on the QWERTY keyboard, the smart phone is generally placed on a desktop. The display screen is parallel with the desktop. Users have to lower the head at a great angle to see the display screen during operating the QWERTY keyboard. Such an operation approach is cumbersome for users.

U.S. patent No. 6,748,242 provides a similar design which includes a keyboard body divided in a first sub-body and a second sub-body. The second sub-body can be turned relative to the first sub-body like the design of a conventional unidirectional axle. When the second sub-body is lifted, the keyboard area of the first sub-body and the keyboard area of the second sub-body are located on two opposite sides of the display screen to receive data entry. On the other hand, Nokia's model 7710 and N-gage directly place the keys on two sides of the display screen without an axle. The screen is positioned transversely.

All the conventional techniques or patents mentioned above, either the mobile phone, PDA or smart phone, have the flip cover turning relative to the host through the unidirectional axle or bi-directional axle to provide different operation modes. However, the current trend is to include a function of downloading data from system providers to users for game playing. The games have evolved from 2D mode to 3D mode. In the 3D game playing, to provide concurrent role movements, alterations of viewing angles and other actions become a big challenge. Although some of the present products are equipped with the original dialing digital keys or an extra keypad, and the functions of the keys on the keypad may be redefined by switching the software so that the operation required on the game playing can be mapped on the corresponding keys, because the conventional products have to be miniaturized to meet user's requirements, the keys on the keypad usually are very small, hence game operation and control are difficult. Moreover, the keys are arranged in a fixed format and have an inherent limitation. While the keys may be refined according to the content of the game, such a design does not conform to ergonomics. User's hands often feel pain or sore after operating for a period of time. It lowers user's desire to play the game.

### SUMMARY OF THE INVENTION

As the conventional mobile phones, PDAs or smart phones, that adopt the unidirectional axle or bi-directional axle to provide different operation modes, mostly adopt a small keypad, which is not desirable for playing games, the present invention aims to provide a portable communication apparatus suitable for playing 3D games.

The portable communication apparatus according to the present invention mainly includes a first body and a second body. The first body has a bi-directional axle on one side, a display screen and a first keyboard area on the top surface with the display screen located between the first keyboard area and the bi-directional axle. The second body has one side hinged on the bi-directional axle, a second keyboard area on the top surface and a third keyboard area on a back surface. The second body is turnable around the bi-directional axle relative to the first body to generate movements around two axes. Hence the second keyboard area or the third keyboard area can selectively face the display screen and fold over the first body. Moreover, when the second body is lifted relative to the first body, the image on the display screen may be turned to a selected angle.

When the second body is folded over the first body, the second keyboard area of the second body is exposed. Users can perform the general communication functions such as dialing phone numbers, sending messages, and receiving calls through the second keyboard area. After the second body is lifted, the first keyboard area on the first body and the third keyboard area on the second body can be used to play 3D games. When the second body is lifted, the image on the display screen also is turned correspondingly to facilitate game playing.

The first keyboard area and the third keyboard area are independent from the second keyboard area. The keys are formed at a size suitable for game playing. Hence the portable communication apparatus according to the invention, in addition to providing the communication functions of the general mobile phone, the first keyboard area and the third keyboard area also provide dedicated control keys for game playing to enable users to play 3D games more conveniently.

Further scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

### BRIEF DESCRIPTION OF THE DRAWINGS

The present invention will become more fully understood from the detailed description given in the illustration below only, and thus is not limitative of the present invention, wherein:
FIG. 1 is a perspective view of the portable communication apparatus of the invention;
FIG. 2 is a schematic view of the portable communication apparatus of the invention with the second body in a lifting condition;
FIG. 3 is a schematic view of the portable communication apparatus of the invention with the second body in a turning condition; and
FIG. 4 is a schematic view of the portable communication apparatus of the invention in another turning condition.

### DETAILED DESCRIPTION OF THE INVENTION

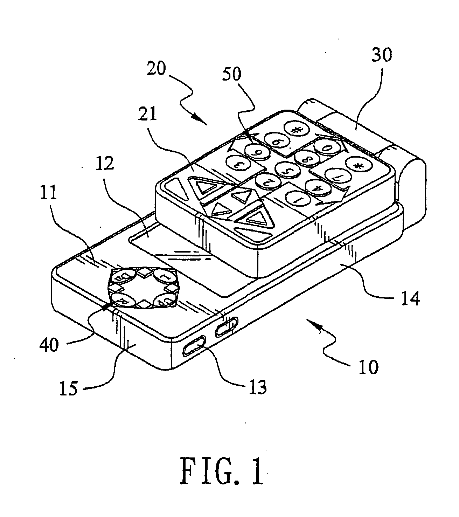

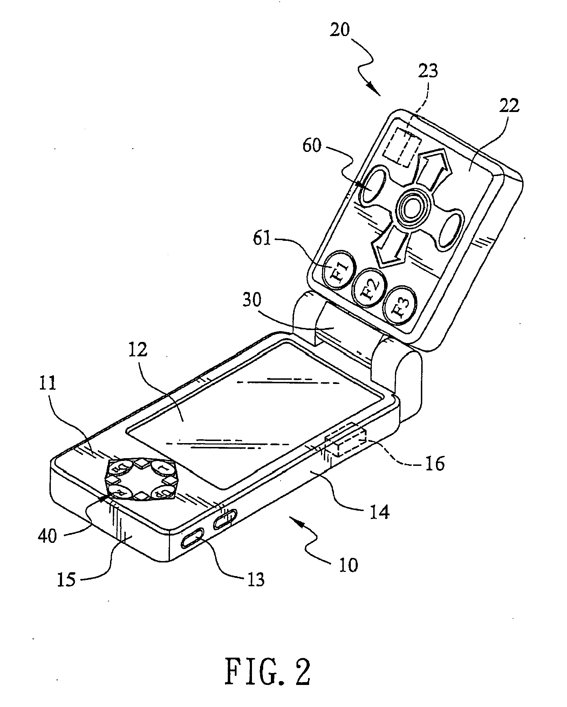

Refer to FIGS. 1 through 4 for an embodiment of the invention. The portable communication apparatus according to the invention may be a mobile phone, smart phone, PDA, pocket PC, hand-held PC or the like. The following discussion is based on a mobile phone as an example.

The embodiment of the invention includes a first body 10 and a second body 20. The first body 10 has a top surface 11, which has a display screen 12 and a first keyboard area 40. The first keyboard area 40 may include a directional key set for playing games. The first body 10 has a bi-directional axle 30 on one side. The display screen 12 is located between the first keyboard area 40 and the bi-directional axle 30. The first body 10 further has function keys 13 on one side close to the first keyboard area 40. The function keys 13 provide different functions according to the content of the games.

The second body 20 has one side hinged on the bi-directional axle 30. The second body 20 has a second keyboard area 50 on a top surface 21, and a third keyboard area 60 on a back surface 22. The second keyboard area 50 includes a phone keypad and other function keys required to dial phones on the general mobile phone. The third keyboard area 60 includes a directional key set and auxiliary function keys 61.

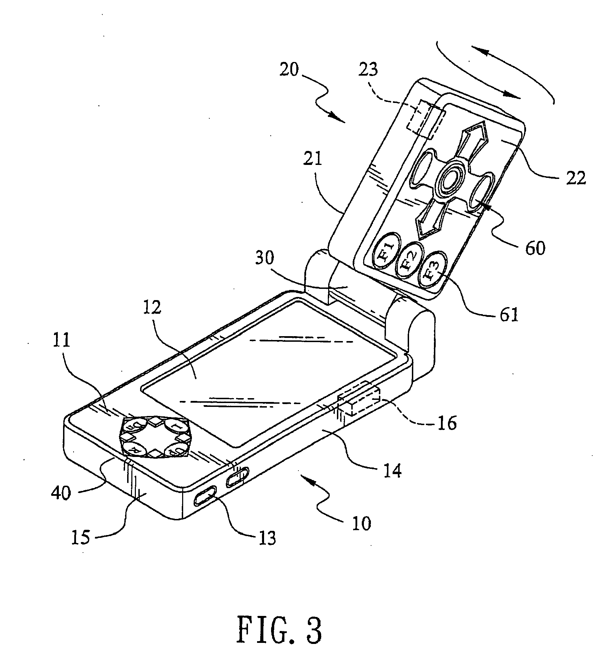

The second body 20 is turnable around the bi-directional axle 30 relative to the first body 10 to generate movements around two axes. Namely the second body 20 can be turned to fold over the first body 10, or be lifted from the first body 10, or as shown in FIG. 3, be swiveled around another axis. In the general condition, the third keyboard area 60 of the second body 20 faces the display screen 12. When the second body 20 is folded over the first body 10, the second keyboard area 50 of the second body 20 is exposed outside to enable users to perform the basic communication functions, such as dialing phone numbers, sending messages, receiving calls, and the like. The second body 20 is smaller than the first body 10. When the second body 20 is folded over the first body 10, the display screen 12 is partly exposed to enable users to perform operations of the general mobile phone in conjunction with the second keyboard area 50. When the second body 20 is lifted (such as for game playing), the functions of receiving calls or dialing phones can be performed anytime desired. Users can turn the second keyboard area 50 toward themselves or directly use the third keyboard area 60 to receive calls, or dial phones (if the number keys are laid out onto the third keyboard area 60).

The first keyboard area 40, second keyboard area 50 and third keyboard area 60 may contain mechanical keys, or touch keys (such as capacitor keys) to reduce the total size of the product.

Three keyboard areas are provided in the previously embodiment. The second body 20 can be folded over the first body 10 to provide basic communication functions such as dialing numbers. The second body 20 may be turned around the first body 10 so that many other different preset functions can be provided.

To facilitate discussion, the first body 10 is formed in a rectangle with a longer side 14 defined as the transverse axis, and a shorter side 15 defined as the longitudinal axis. When the second body 20 is lifted, the first keyboard area 40 and the third keyboard area 60 are positioned respectively on the right side and left side of the display screen 12. Operation on the first keyboard area 40 and the third keyboard area 60 is corresponding to the longer side 14 (transverse axis). When the second body 20 is folded over the first body 10, and the second keyboard area 50 on the top surface 21 is exposed, operation on the second keyboard area 50 is corresponding to the shorter side 15 (longitudinal axis).

For instance, the first keyboard area 40 and the third keyboard area 60 provide operation keys required for playing 3D games, such as controlling the roles in the games to move forwards, backwards, leftwards, rightwards, upwards and downwards, or observing movements of the visual spot in the environment of the games. The auxiliary function keys 61 close to the third keyboard area 60 and the function keys 13 on one side of the first body 10 can be used to do other operations in the games, such as "decide", "cancel", "attack", "defense", "trick", and the like. Or they may be defined differently according to the content of the game. Of course, different games may have different operation and control combinations of the keyboard areas. For instance, coupling the first keyboard area 40 with the second keyboard area 50 can provide more control keys. Some of the keys on the second keyboard area 50 may be defined as directional keys. Even the first keyboard area 40, second keyboard area 50 and third keyboard area 60 may be used to do operation and control simultaneously. When the right thumb is on the second keyboard area 50 (or the third keyboard area 60) to do operations, the other four fingers of the right hand can operate the third keyboard area 60 (or the second keyboard area 50) at the same time.

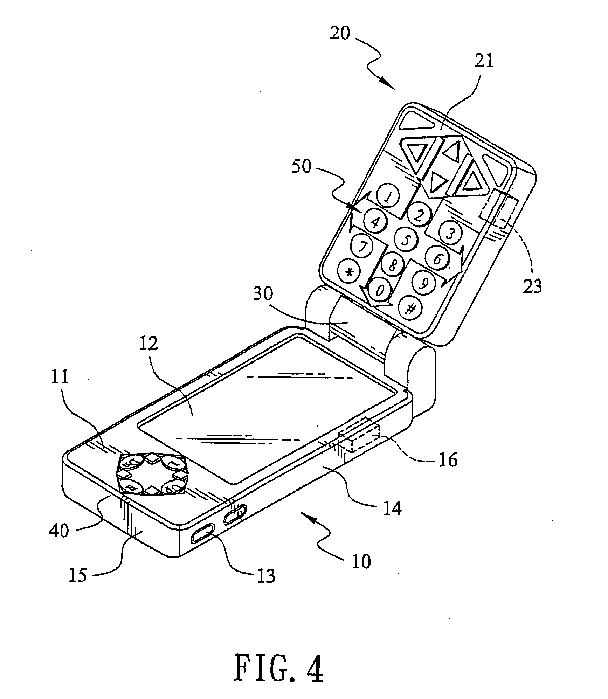

In addition, the second body 20 may be turned to another position. As shown in FIG. 4, the second body 20 is turned relative to the first body 10, and the second keyboard area 50 on the second body 20 faces upwards. In such a condition, the first keyboard area 40 can provide basic movements for the leading role of the game. The second keyboard area 50 has more keys, thus can provide more diversified defmitions according to the content of the game.

It is to be noted that when the second body 20 is lifted relative to the first body 10 and the third keyboard area 60 faces upwards, or the second body 20 is turned relative to the first body 10 and the second keyboard area 50 faces upwards, or the second body 20 is turned relative to the first body 10 to a selected angle, the image displayed on the display screen 12 also is turned correspondingly to mate the operation of content of the game and the three keyboard areas. In other words, the picture on the display screen 12 can be turned from the original corresponding to the shorter side 13 for 90 degrees to correspond to the longer side 14 according to the contend of the game and preset the operation method of the game to facilitate game playing. In order to achieve the operation and control previously discussed, the first body 10 and/or the second body 20 may include an accelerometer. As shown in the drawings, three-axle accelerometers 16 and 23 are added. The three-axle accelerometers 16 and 23 can detect the acceleration conditions received by the first body 10 and/or the second body 20, such as detecting the direction of gravity force, or the acceleration speed resulting from turning of the first body 10 and the second body 20, thereby determining the horizontal condition or accelerating conditions of the two bodies. Moreover, the detected signals of the three-axle accelerometers 16 and 23 can be used to control and alter the image direction on the display screen 12 according to the turning condition of the second body 20 relative to the first body 10. The turning condition of the second body 20 may also be used to control the game.

Thus the present invention can eliminate the disadvantages occurring to conventional techniques that cannot play games in the 3D mode. The keyboard areas according to the embodiment of the invention provide the basic moving functions for the roles in the game of the 3D mode such as moving forwards, backwards, leftwards, rightwards, upwards and downwards. They are located independently on the keyboard areas different from the numeral keys, used in the communication functions. The keys in the embodiment of the invention are formed at a desirable size to facilitate intuitive operation without creating confusion. Users can play the games for a long period of time in a more convenient manner.

Knowing the invention being thus described, it will be obvious that the same may be varied in many ways. Such variations are not to be regarded as a departure from the spirit and scope of the invention, and all such modifications as would be obvious to one skilled in the art are intended to be included within the scope of the following claims.

## Claims

1. A portable communication apparatus, comprising:
a first body having a bi-directional axle on one side and a display screen and a first keyboard area on a top surface, the display screen being located between the first keyboard area and the bi-directional axle; and
a second body having one side hinged on the bi-directional axle, a second keyboard area located on a top surface thereof and a third keyboard area located on a back surface;
wherein the second body is turnable around the bi-directional axle relative to the first body to move around two axes to selectively turn the second keyboard area or the third keyboard area to face the display screen and fold over the first body, or incline a selected angle relative to the first body.

2. The portable communication apparatus of claim 1, wherein the display screen is partly exposed when the second body folds over the first body.

3. The portable communication apparatus of claim 1, wherein the first body has a plurality of function keys on another side.

4. The portable communication apparatus of claim 1, wherein the first keyboard area has a directional key set.

5. The portable communication apparatus of claim 1, wherein the third keyboard area includes a directional key set and a plurality of auxiliary function keys.

6. The portable communication apparatus of claim 1, wherein the second keyboard area is a phone keypad.

7. The portable communication apparatus of claim 1, wherein the first body is a rectangle which has a longer side defined as a transverse axis and a shorter side defined as a longitudinal axis, the first keyboard area and the second keyboard area being operated corresponding to the transverse axis, and the third keyboard area being operated corresponding to the longitudinal axis.

8. The portable communication apparatus of claim 1, wherein the first body includes a 3-axis accelerometer to detect acceleration of the first body.

9. The portable communication apparatus of claim 1, wherein the second body includes a 3-axis accelerometer to detect acceleration of the second body.

10. The portable communication apparatus of claim 9, wherein a direction of an image displayed on the display screen is changed according to a detection signal of the 3-axis accelerometer.

11. The portable communication apparatus of claim 1, wherein keys of the first keyboard area, the second keyboard area and the third keyboard area are mechanical keys, touch keys or the combination thereof.

12. The portable communication apparatus of claim 11, wherein the touch keys are capacitor keys.

13. A portable communication apparatus, comprising:
a first body having an axle on one side and a display screen and a first keyboard area on a top surface, the display screen being located between the first keyboard area and the bi-directional axle; and
a second body having one side hinged on the axle, a second keyboard area located on a top surface thereof and a third keyboard area located on a back surface;
wherein the second body is turnable around the axle relative to the first body to fold over the first body, or incline a selected angle relative to the first body.

14. The portable communication apparatus of claim 13, wherein the second keyboard area is a phone keypad.

15. The portable communication apparatus of claim 13, wherein the axle is two or more dimensions axle such that the second body is turnable relative to the first body to selectively turn the second keyboard area or the third keyboard area to face the display screen.

16. The portable communication apparatus of claim 13, wherein the first body includes a 3-axis accelerometer to detect acceleration of the first body.

17. The portable communication apparatus of claim 13, wherein the second body includes a 3-axis accelerometer to detect acceleration of the second body.

18. The portable communication apparatus of claim 17, wherein a direction of an image displayed on the display screen is changed according to a detection signal of the 3-axis accelerometer.

19. The portable communication apparatus of claim 13, wherein keys of the first keyboard area, the second keyboard area and the third keyboard area are mechanical keys, touch key or the combination thereof.

20. The portable communication apparatus of claim 19, wherein the touch keys are capacitor keys.

## Amended claims

### Amended claims in accordance with Rule 86(2) EPC.

**1.** A portable communication apparatus, comprising:
a first body (10) having an axle (30) on one side and a display screen (12) and a first keyboard area (40) on a top surface (11), the display screen (12) being located between the first keyboard area (40) and the axle (30); and
a second body (20) having one side hinged on the axle (30), a second keyboard area (50) located on a top surface (21) thereof;
wherein the second body (20) is turnable around the axle (30) relative to the first body (10) to incline at a selected angle relative to the first body (10),
**characterised in that** a third keyboard area (60) is located on a back surface (22) of the second body (20), and second body (20) is turnable around the axle (30) to fold over the first body (10).

**2.** The portable communication apparatus of claim 1, wherein the second keyboard area (40) is a phone keypad.

**3.** The portable communication apparatus of claim 1 or 2, wherein the axle (30) is a two or more dimensional axle such that the second body (20) is turnable relative to the first body (10) to selectively turn the second keyboard area (50) or the third keyboard area (60) to face the display screen (12).

**4.** The portable communication apparatus of claim 3, wherein the axle (30) is a bidirectional axle.

**5.** The portable communication apparatus of claim 4, wherein the display screen is partly exposed when the second body (20) folds over the first body (10).

**6.** The portable communication apparatus of claim 4, wherein the first body (10) has a plurality of function keys on another side.

**7.** The portable communication apparatus of claim 4, wherein the first keyboard area (40) has a directional key set.

**8.** The portable communication apparatus of claim 4, wherein the third keyboard area (60) includes a directional key set and a plurality of auxiliary function keys (61).

**9.** The portable communication apparatus of claim 4, wherein the first body (10) is a rectangle which has a longer side (14) defined as a transverse axis and a shorter side (15) defined as a longitudinal axis, the first keyboard area (40) and the second keyboard area (50) being operated corresponding to the transverse axis, and the third keyboard area (60) being operated corresponding to the longitudinal axis.

**10.** The portable communication apparatus of claim 1 or 4, wherein the first body (10) includes a 3-axis accelerometer (16) to detect acceleration of the first body.

**11.** The portable communication apparatus of claim 1 or 4, wherein the second body (20) includes a 3-axis accelerometer (23) to detect acceleration of the second body.

**12.** The portable communication apparatus of claim 11, wherein a direction of an image displayed on the display screen (12) is changed according to a detection signal of the 3-axis accelerometer (16).

**13.** The portable communication apparatus of claim 1 or 4, wherein keys of the first keyboard area (40), the second keyboard area (50) and the third keyboard area (60) are mechanical keys, touch keys or a combination thereof.

**14.** The portable communication apparatus of claim 13, wherein the touch keys are capacitor keys.
